# EUROPEAN PATENT APPLICATION

(11) **EP 4 318 746 A1**
(43) Date of publication of application: **07.02.2024**
(21) Application number: 23189603.6
(22) Date of filing: 03.08.2023
(51) Int. Cl.: H01M 50/107, H01M 4/08, H01M 4/38, H01M 4/583, H01M 4/66, H01M 50/116, H01M 50/148, H01M 50/179, H01M 50/188, H01M 50/191, H01M 50/198, H01M 50/56, H01M 4/02, H01M 6/16

(54) **PROCESS FOR PRESS-CONTACTING A LITHIUM ANODE ONTO THE INNER SURFACE OF A CYLINDRICAL CELL CASING**

(30) Priority: 05.08.2022 US 202263395493 P
(71) Applicant: Greatbatch Ltd., Clarence, New York 14031 (US)
(72) Inventor: PANZER, Brian D., Williamsville, 14221 (US); HARTWIG, Jordan A., East Aurora, 14052 (US); VOSS, Gregory A., Alden, 14004 (US); ULRICH, Joshua C., East Aurora, 14052 (US); ODDY, David, Clarence, 14031 (US); KASSIAN, Alycia, Buffalo, 14201 (US); KLEIN, Zachary, Buffalo, 14203 (US)
(74) Representative: Drywood, Rosalind Aerona

(57) **Abstract**

An electrochemical cell has a cylindrically-shaped casing tube with at least first and second lithium sheets swaged onto its inner surface. The first lithium sheet has respective spaced apart first right and left edges, and the second lithium sheet has spaced apart second right and left edges. The first and second right edges and the first and second left edges of the swaged first and second lithium sheets are adjacent to but spaced apart from each other by about 0.5° to about 1° about the inner circumference of the cylindrically-shaped casing tube. A novel process for swaging the first and second lithium sheets onto the inner surface of the casing tube is also described.

## Description

### CROSS-REFERENCE TO RELATED APPLICATION

This application claims priority to U.S. provisional application Serial No. 63/395,493, filed on August 5, 2022.

### FIELD OF THE INVENTION

The present invention generally relates to the conversion of chemical energy to electrical energy. More particularly, the present invention relates to an electrochemical cell having an electrode assembly comprising at least two lithium sheets that are pressed or swaged into direct contact with the inner surface of a cylindrically-shaped casing tube without touching each other. Ever though their adjacent edges are spaced-apart by a small distance, the lithium sheets do not contact each other as they are pressed onto the inner surface of the casing. Since lithium is a relatively sticky material, particularly to itself, should the sheets touch each other, they could tear as they are being separated and contacted to the casing. Fluorinated carbon (CFₓ) is a preferred cathode active material contacted to a plate-shaped cathode current collector.

### BACKGROUND OF THE INVENTION

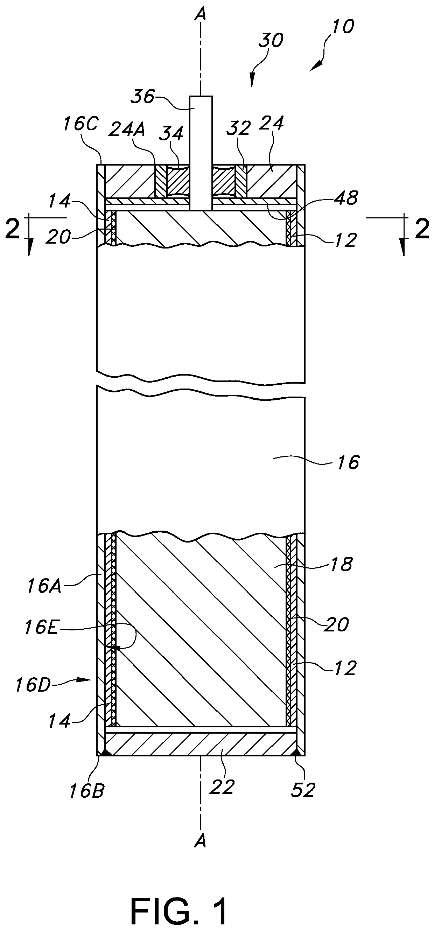

Referring first to FIG. 1, a partial cross-sectional view of a cylindrical electrochemical cell 10 comprising a casing tube 16 with a cylindrically-shaped sidewall 16A extending along a longitudinal axis A-A from a lower open end defined by a distal annular edge 16B to an upper open end defined by a proximal annular edge 16C is illustrated. The casing tube 16 is closed at its lower open end adjacent to the distal annular edge 16B by a closure plate 22 and at its upper open end adjacent to the proximal annular edge 16C by a lid 24. The casing tube 16 also has a thickness defined by the distance between an outer cylindrical surface 16D and an inner cylindrical surface 16E.

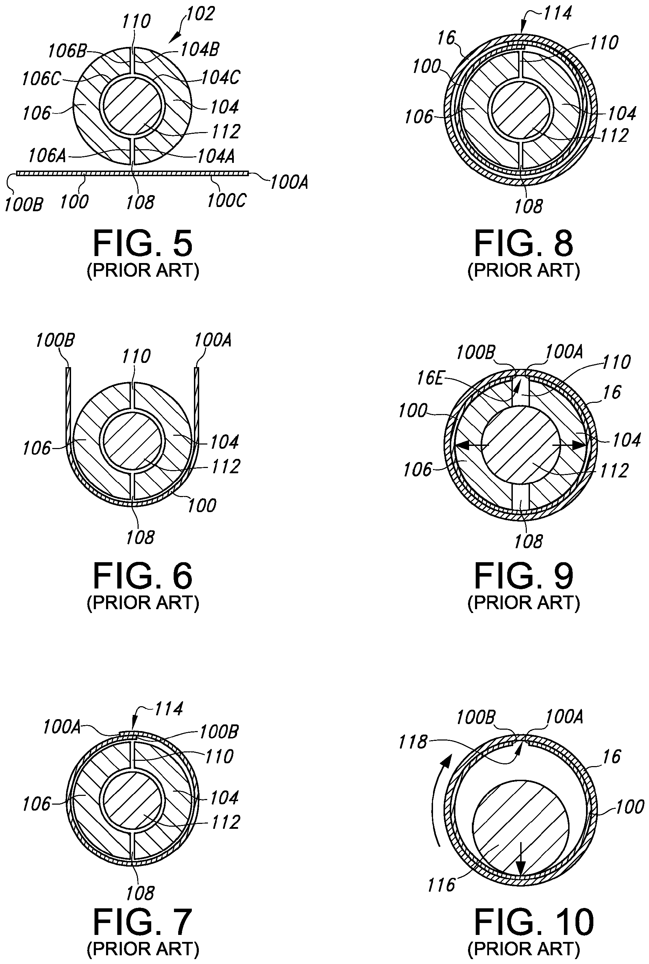

Turning now to FIGs. 5 to 10, the sequential steps for swaging a sheet of lithium 100 onto the inner surface 16E of the casing tube 16 according to a prior art process is illustrated. As shown in FIG. 5, the prior art process begins with an elongate expandable tool 102 comprising two elongate U-shaped laterally-movable dies 104 and 106 that are aligned with their opposed elongate planar surfaces 104A, 104B and 106A, 106B facing, but not in contact with, each other. Elongate semi-circular surfaces 104C and 106C reside between the respective planar surfaces 104A, 104B and 106A, 106B of the dies. In this position, there are lower and upper gaps 108 and 110 between the opposed planar surfaces 104A, 104B and 106A, 106B of the laterally-movable dies 104, 106. The movable dies 104 and 106 are preferably made from a relatively lubricious material, for example, high density polyethylene (HDPE), however, any polymeric material that will not stick to lithium is contemplated.

With the elongate laterally-movable dies 104 and 106 facing each other, an opening is formed between them that is sized to receive a radially-expandable shaft 112. The elongate expandable tool 102 comprising the radially-expandable shaft 112 positioned inside the laterally-movable dies 104 and 106 has an outer circumference that fits inside the open-ended casing tube 16. The elongate expandable tool 102 also has a working length that is somewhat less than the height of the casing tube, as measured from the distal annular edge 16B to the proximal annular edge 16C.

The lithium sheet 100 has a rectangular shape with a width delineated by spaced apart right and left edges 100A and 100B, and a height extending from an upper edge 100C to an opposite lower edge (not shown). The width of the lithium sheet 100 defined by the right and left edges 100A, 100B is substantially the same as the circumference of the inner surface 16E of the casing tube 16 while the height defined by the opposed lower edge and the upper edge 100C is somewhat less than the height of the casing tube (the distance from 16B to 16C). With the elongate expandable tool 102 positioned above the lithium sheet 100, the lower gap 108 between the opposed U-shaped laterally-movable dies 104 and 106 is aligned at the center of the width of the sheet.

As shown in FIGs. 6 and 7, the lithium sheet 100 is then wrapped around the laterally-movable dies 104, 106 with a small overlap 114 at the edges 100A, 100B adjacent to the upper gap 110 between the opposed dies. In this position, the lithium wraps about 380° around the elongate expandable tool 102.

As shown in FIG. 9, this assembly is then inserted into the lumen of the open-ended casing tube 16 and aligned so that the opposed lower edge and upper edge 100C of the lithium sheet 100 are spaced inwardly from the adjacent distal annular edge 16B and the proximal annular edge 16C. The radially-expandable shaft 112 is then actuated (FIG. 9) to move against the elongate semi-circular surfaces 104C and 106C of the laterally-movable dies 104, 106, which causes the dies 104 and 106 to move laterally away from each other. This movement presses the lithium sheet 100 against the inner surface 16E of the casing tube 16. As the width of the lower and upper gaps 108 and 110 between the movable dies 104 and 106 increases to unfurl the lithium sheet 100, the opposed edges 100A and 100B at the overlap 114 slide away from each other. Lithium is a relatively sticky material, so this movement of the elongate expandable tool 102 causes the lithium sheet 100 to be press-contacted onto the inner surface 16E of the casing tube 16.

After the lithium sheet 100 is press-contacted onto the casing tube 16, the radially-expandable shaft 112 is relaxed to its unactuated state to cause the laterally-movable dies 104 and 106 to return to the configuration shown in FIGs. 5 to 8. The expandable tool 102 is then removed from inside the casing tube 16, leaving the lithium sheet 100 behind, press-contacted onto the inner surface 16E of the tube.

As shown in FIG. 10, an elongate rotatable rod 116 is then inserted inside the casing tube 16. This rod 116 is also preferably made from a relatively lubricious material, for example, high density polyethylene (HDPE), however, any polymeric material that will not stick to lithium is suitable. The rotatable rod 116 has a diameter that is less than the inner diameter of the lithium sheet 100 pressed against the inner surface 16E of the casing tube 16. The rod 116 is then rotated around the inner surface of the lithium sheet 100 with sufficient force to swage the lithium into direct press-fit contact with the inner surface 16E. Alternatively, the rod 116 is held steady and the casing tube 16 with the lithium sheet 100 is rotated around the circumference of the rod with sufficient force to swage the lithium into direct press-fit contact with the inner surface 16E of the tube. In its final position, there is a small gap 118 between the opposed edges 110A, 100B of the swaged lithium.

One significant disadvantage of the prior art swaging process is that prior to being inserted into the lumen of the casing tube 16, the lithium sheet 100 wraps about 380° around the opposed U-shaped laterally-movable dies 104 and 106 of the expandable tool 102. This means that the opposed edges 100A, 100B of the lithium sheet are in contact with each other at the overlap 114. Since lithium is a very sticky material, particularly to itself, when the elongate expandable tool 102 is actuated to cause the dies 104 and 106 to move laterally away from each other to press-contact the lithium sheet 100 onto the inner surface 16E of the casing tube 16, as the opposed edges 100A and 100B at the overlap 114 slide away from each other, the stickiness of the lithium to itself can cause the lithium to deform out of its intended uniform thickness and shape, and possibly even tear at and adjacent to the overlap. This is undesirable. A deformed lithium sheet 100 can lead to unpredictable cell discharge.

### SUMMARY OF THE INVENTION

Aspects and embodiments of the present invention are set out in the appended claims.

The present invention relates to an electrochemical cell comprising lithium as an anode active material that is swaged into direct contact with the inner surface of a casing tube. The thusly formed tube-shaped lithium anode provides an anode lumen into which the cathode is received. The cathode is formed from a solid cathode active material, such as fluorinated carbon (CFₓ), that may be formed into a cylindrically shaped body pressed into direct intimate contact with an elongate, plate-shaped cathode current collector. The cathode contained inside a separator envelope is slid into the anode lumen so that anode active material directly faces the cathode active material in a substantially 360° manner. The terminal pin of a glass-to-metal seal (GTMS) is joined to the proximal end of the, preferably plate-shaped, cathode current collector. The terminal pin is preferably of molybdenum, while the plate-shaped cathode current collector is preferably of titanium coated with carbon. The other end of the terminal pin is supported in the GTMS and the ferrule of the GTMS may be welded into an opening in a lid. The lid supporting the GTMS may then be welded to the upper open end of the casing tube to close that end of the casing.

The electrode assembly is activated with a nonaqueous electrolyte filled into the casing through a fill port, and the fill port is hermetically sealed. That way, the casing tube serves as the negative terminal and the terminal pin of the GTMS connected to the, preferably plate-shaped, current collector serves as the positive terminal for the electrochemical cell. This makes the present electrochemical cell particularly useful for powering implantable medical devices, such as cardiac pacemakers, defibrillators, drug pumps, neurostimulators, and the like.

More specifically, the present invention relates to an electrochemical cell comprising a casing of a cylindrically-shaped casing tube extending from a lower open end to an upper open end. The casing tube has an outer surface spaced from an inner surface having an inner circumference. A closure plate closes the lower open end of the casing tube. A glass-to-metal seal (GTMS) comprises a ferrule supporting an insulator glass contacting a terminal pin centered inside the ferrule. The GTMS resides in an opening in a lid with the ferule being welded to the lid and the lid, in turn, is secured to the casing tube at the upper open end thereof.

An electrode assembly housed inside the casing comprises an anode preferably formed of at least a first lithium sheet and a second lithium sheet contacted to the inner surface of the cylindrically-shaped casing tube. Importantly, the first lithium sheet has spaced apart first right and left edges and the second lithium sheet has spaced apart second right and left edges. The first and second right edges of the first and second lithium sheets contacted to the inner surface of the cylindrically-shaped casing tube are preferably adjacent to but spaced apart from each other, and the first and second left edges of the first and second lithium sheets contacted to the inner surface of the casing tube are preferably adjacent to but spaced apart from each other. For instance, the first and second right edges of the first and second lithium sheets are spaced apart from each other by about 0.5° to about 1° about the inner circumference of the cylindrically-shaped casing tube, and the first and second left edges of the respective first and second lithium sheets are spaced apart from each other by about 0.5° to about 1° about the inner circumference of the casing tube.

The cathode preferably comprises fluorinated carbon (CFₓ) contacted to a plate-shaped cathode current collector. The cathode preferably has a cylindrical shape and resides in the casing tube, spaced from the first and second lithium sheets.

A separator segregates the first and second lithium sheets from directed physical contact with the cathode, and an electrolyte in the casing activates the electrode assembly. That way, the casing tube contacting the first and second lithium sheets serves as a negative terminal for the cell, and the cathode current collector contacted to the cathode active material and being connected to the terminal pin electrically isolated from the casing by the GTMS serves as the positive terminal for the cell.

These and other aspects of the present electrochemical cell will become more apparent to those skilled in the art by reference to the following detailed description and the appended drawings.

### BRIEF DESCRIPTION OF THE DRAWINGS

FIG. 1 is an elevational view, partly in cross-section, of an exemplary electrochemical cell 10 according to the present invention.
FIG. 2 is a cross-sectional view taken along line 2-2 of FIG. 1.
FIG. 3 is a side elevational view of an exemplary cathode current collector 38 for the electrochemical cell 10 shown in FIGs. 1 and 2.
FIG. 4 is a side elevational view, partly broken away, of the proximal end 36A of a terminal pin connected to a land 40 of the cathode current collector 38 shown in FIG. 3 by a weld 50.
FIG. 5 is a plan view of the first step in a prior art process for swaging a lithium sheet 100 onto the inner surface 16E of the cylindrical casing 16 for the cell 10 shown in FIG. 1 using an elongate expandable tool 102 comprising a radially-expandable shaft 112 residing between opposed expandable dies 104 and 106.
FIG. 6 is a plan view of the next step in the prior art swaging process showing the lithium sheet 100 partially wrapped around the opposed expandable dies 104 and 106 of the elongate expandable tool 102.
FIG. 7 is a plan view of the next step in the prior art swaging process showing the lithium sheet 100 completely wrapped around the expandable tool 102 with an overlap 114 at the opposed ends 100A and 100B of the lithium sheet.
FIG. 8 is a plan view of the next step in the prior art swaging process showing the expandable tool 102 supporting the wrapped lithium sheet 100 after having been inserted inside the cylindrically-shaped cell casing tube 16.
FIG. 9 is a plan view of the next step in the prior art swaging process showing the expandable shaft 112 having been actuated to move the opposed expandable dies 104, 106 away from each other to press the lithium sheet against the inner surface 16E of the casing tube 16.
FIG. 10 is a plan view of the final step in the prior art swaging process showing that the expandable tool 102 has been removed from inside the casing tube 16 and with an elongate rotatable rod 116 swaging the lithium sheet 100 onto the inner surface 16E of the casing tube 16.
FIG. 11 is a plan view of the first step in a process according to the present invention for swaging a first lithium sheet 12 onto the inner surface 16E of the cylindrical casing tube 16 for the cell 10 shown in FIG. 1 using cylindrical mandrel 122.
FIG. 12 is a plan view of the next step in the swaging process according to the present invention showing the first lithium sheet 12 partially wrapped around the cylindrical mandrel 122 with a forming tool 124 positioned above the lithium sheet.
FIG. 13 is a plan view of the next step in the swaging process according to the present invention showing opposed diagonal forming tools 126 and 128 completing the wrap of the first lithium sheet 12 around the mandrel 122.
FIG. 14 is a plan view of the next step in the swaging process according to the present invention showing the cylindrical mandrel 122 supporting the first lithium sheet 12 after having been inserted inside the casing tube 16.
FIG. 15 is a plan view of the next step in the swaging process according to the present invention showing the cylindrical mandrel 122 swaging the first lithium sheet 12 onto the inner surface 16E of the casing tube 16.
FIG. 16 is a plan view of the next step in the swaging process according to the present invention showing the cylindrical mandrel 122 supporting a second lithium sheet 14 after having been inserted inside the casing tube 16.
FIG. 17 is a plan view of the next step in the swaging process according to the present invention showing the cylindrical mandrel 122 swaging a second lithium sheet 14 onto the inner surface 16E of the casing tube 16.
FIG. 18 is a plan view of the final step in the swaging process according to the present invention showing the first and second lithium sheets 12 and 14 after having been swaged onto the inner surface 14E of the casing tube 16 with opposed gaps 26 and 28 of about 0.5° to about 1° between the adjacent opposed edges of the swaged first and second lithium sheets.

### DETAILED DESCRIPTION OF THE PREFERRED EMBODIMENTS

As used herein, the term "swage" means that a sheet of lithium is press-contacted to the inner surface of a casing under sufficient force so that the lithium sheet has a somewhat reduced thickness and a somewhat greater width and height as the force deforms the lithium from its original shape and thickness.

Referring back again to FIG. 1, a partial cross-sectional view of an electrochemical cell 10 according to the present invention is illustrated. The electrochemical cell 10 has an electrode assembly comprising anode portions in the form of spaced-apart lithium sheets 12 and 14 that have been swaged into direct press-fit contact with the inner surface of the cylindrically-shaped casing tube 16. The lithium sheets 12, 14 are segregated from a cathode 18 by an intermediate separator 20. The cylindrically-shaped sidewall 16A of the casing tube 16 extends along the longitudinal axis A-A from the lower open end defined by the distal annular edge 16B to the upper open end defined by the proximal annular edge 16C. The closure plate 22 closes the lower open end at the distal annular edge 16B while the lid 24 closes the upper open end at the proximal annular edge 16C. The casing tube 16 thickness is defined by the distance between the outer cylindrical surface 16D and the inner cylindrical surface 16E. The casing for the electrochemical cell 10 comprising the cylindrically-shaped tube 16, lower closure plate 22 and upper lid 24 is made of metal, such as stainless steel, titanium, nickel, aluminum, with titanium coated with carbon being preferred.

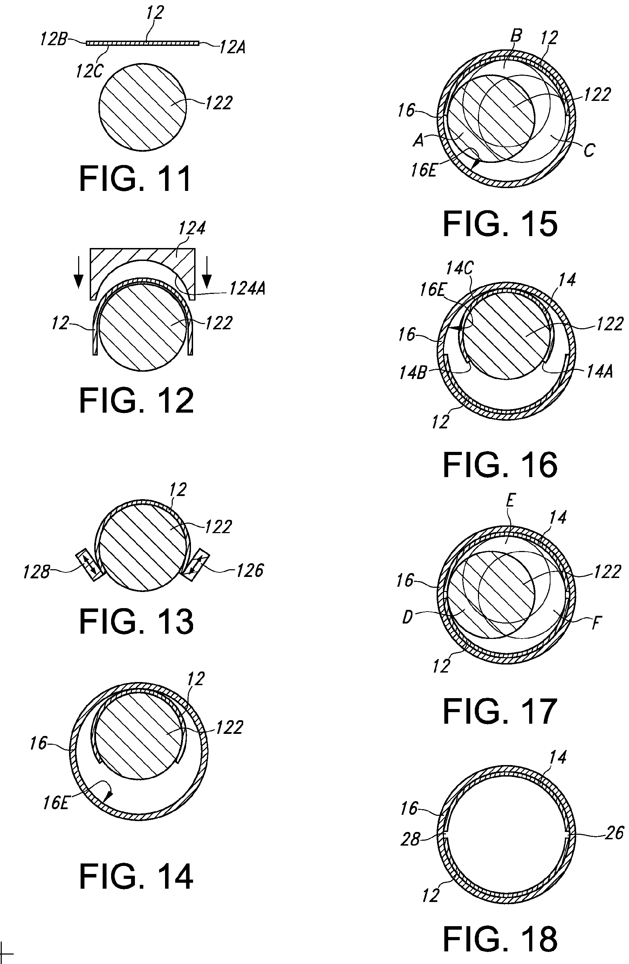

Referring now to FIGs. 11 to 18, an improved swaging process according to the present invention is illustrated. With respect to the electrochemical cell 10 illustrated in FIG. 1, this process requires the use of two sheets of lithium. The first sheet 12 is shown in FIGs. 11 to 18 and the second sheet 14 is shown in FIGs. 16 to 18. The first lithium sheet 12 has a width delineated by spaced apart right and left edges 12A and 12B, and a height extending from an upper edge 12C to an opposed lower edge (not shown). Similarly, the second lithium sheet 14 has a width delineated by spaced apart right and left edges 14A and 14B, and a height extending from an upper edge 14C to an opposed lower edge (not shown) The height of each sheet 12, 14 is substantially the same as that of the lithium sheet 100 used in the previously described prior art process (FIGs. 5 to 10), which is somewhat less than the height of the casing tube 16. Further, the combined width of the two lithium sheets 12 and 14 is slightly less than the circumference of the inner surface 16E of the casing tube 16.

As shown in FIG. 11, a cylindrical mandrel 122 is centered below the first lithium sheet 12. A forming tool 124 (FIG. 12) has a downwardly-facing semi-circular working surface 124A that substantially matches the curvature of the mandrel 122. With the first lithium sheet 12 positioned between the cylindrical mandrel 122 and the forming tool 124, the forming tool is moved in a downwardly direction towards the mandrel to partially wrap the lithium sheet 12 around the mandrel 122.

FIG. 13 shows that opposed diagonal forming tools 126 and 128 are extended, then retracted, to complete the wrap of the first lithium sheet 12 around the cylindrical mandrel 122. This drawing also shows that the first lithium sheet 12 wraps more than 180° around the mandrel 122.

As shown in FIG. 14, this assembly is then inserted into the lumen of the open-ended casing tube 16 and aligned so that the lithium sheet 12 is spaced inwardly from the distal annular edge 16B and the proximal annular edge 16C thereof.

As next shown in FIG. 15, the cylindrical mandrel 122 is then actuated to rotate and swage the first lithium sheet 12 onto the inner surface 16E of the casing tube 16. Preferably, a computer numerical controlled (CNC) machine (not shown) is used to smoothly and evenly rotate the mandrel 122 supporting the first lithium sheet 12 against the inner surface 16E. This drawing depicts three illustrative positions A, B and C of the rotating mandrel 122 inside the casing tube 16, however, in practice, the CNC controlled rotatable mandrel delivers a desired smooth continuous rolling translational force against the lithium sheet 12 contacting the inner surface 16E of the casing tube.

As shown in FIG. 16, the first lithium sheet 12 swaged onto the inner surface 16E of the casing tube 16 extends somewhat less than 180° about the inner circumference of the casing tube. Preferably, the first lithium sheet 12 extends about 179° to about 179.5° around the inner surface 16E. The casing tube 16 is also shown having been rotated 180° so that the first lithium sheet 12 covers a lower portion of the inner surface 16E.

FIG. 16 further shows the rotatable mandrel 122 supporting the second lithium sheet 14 positioned inside the casing tube 16. As already described with respect to FIGs. 11 to 15, the second lithium sheet 14 has previously been formed onto the mandrel 122 using the U-shaped forming tool 124 (FIG. 12) and the opposed diagonal forming tools 126, 128 (FIG. 13).

In a similar manner as previously described with respect to FIG. 15, FIG. 17 shows that the rotatable mandrel 122 is again actuated under CNC control to rotate and smoothly swage the second lithium sheet 14 onto the inner surface 16E of the casing tube 16. This drawing shows three positions D, E and F of the rotatable mandrel 124 inside the casing tube 16, however, that is for illustrative purposes. This completes contacting and swaging the spaced-apart first and second lithium sheets 12, 14 onto the inner surface 16E of the casing tube 16 to thereby form the anode for the electrochemical cell 10 shown in FIG. 1.

The swaged second lithium sheet 14 extends from about 179° to about 179.5° around the inner surface 16E. This means that there are opposed gaps 26 and 28 (FIG. 18) of about 0.5° to about 1° between the adjacent opposed edges of the swaged first and second lithium sheets 12, 14. In other words, there is a gap 26 that ranges from about 0.5° to about 1° between the opposed edges 12A and 14A and a diametrically opposed gap 28 of a similar width between the opposed edges 12B and 14B of the respective first and second lithium sheets 12 and 14. However, since the first and second lithium sheets 12, 14 never contact each other during the swaging process according to the present invention, there is not a problem with the lithium being deformed out of its intended shape in a similar manner as previously described with respect to the prior art process shown in FIGs. 8 and 9 when the opposed edges 100A and 100B of the relatively sticky lithium sheet 100 at the overlap 114 are moved apart from each other.

Referring back to FIG. 1, a glass-to-metal seal (GTMS) 30 is supported in an opening 24A in the casing lid 24. The GTMS 30 comprises a ferrule 32 supporting an insulator glass 34 that hermetically seals between an inner surface of the ferrule and a terminal pin 36. The ferrule 32 is welded to the lid 24 in the lid opening 24A so that the lid and the GTMS 30 together close the proximal open end 16C of the casing tube 16. The insulator glass 34 is of a corrosion resistant type having up to about 50% by weight silicon such as CABAL 12, TA 23, FUSITE 425 or FUSITE 435. The terminal pin 36 is of molybdenum, aluminum, nickel alloy, or stainless steel, with the former being preferred.

Preferably, the electrochemical cell 10 is built in a case-negative design with the casing tube 16, bottom closure plate 22, lid 24 and ferrule 32 for the GTMS 30serving as the negative terminal for the anode sheets 12, 14. However, the cell 10 can also be built in a case-positive design with the positions of the anode and the cathode being reversed or switched, as is well known by those skilled in the art.

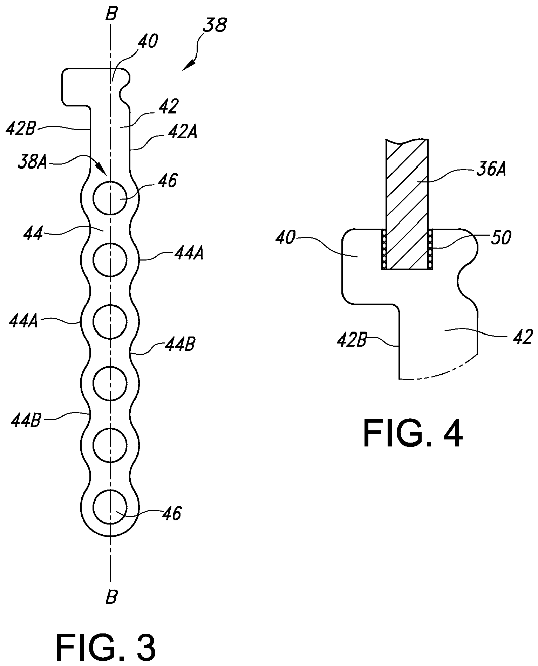

FIG. 3 illustrates an exemplary embodiment of a cathode current collector 38 that is useful with the electrochemical cell 10 of the present invention. The current collector 38 is a plate-shaped member extending along a longitudinal axis B-B from a proximal land 40 connected to an intermediate rectangularly-shaped portion 42, in turn, connected to an elongate undulated portion 44. The current collector 38 has a thickness defined by a front major side 38A spaced from a back major side (not shown), both sides extending to opposed edges. The intermediate portion 42 has straight edges 42A and 42B that are parallel to each other between the front and back major sides. The land 40 is shown extending laterally outwardly beyond the left straight edge 42A, although that is an exemplary embodiment of the current collector 38. Other embodiments have the land as an upward extension of the rectangularly-shaped portion 42 without any laterally extending portions. The elongate undulating portion 44 extends distally from the rectangularly-shaped portion 42 and comprises opposed undulating edges, each edge having alternating crests 44A and troughs 44B between the front and back major sides. The current collector 38 further has a series of openings 46 through its thickness. The openings 46 are centered between outwardly extending crests 44A of the opposed undulating edges. Suitable materials for the current collector 38 include titanium, tantalum, platinum, gold, aluminum, cobalt nickel alloys, highly alloyed ferritic stainless steel containing molybdenum and chromium, and nickel-, chromium- and molybdenum-containing alloys, with the former coated with carbon being preferred.

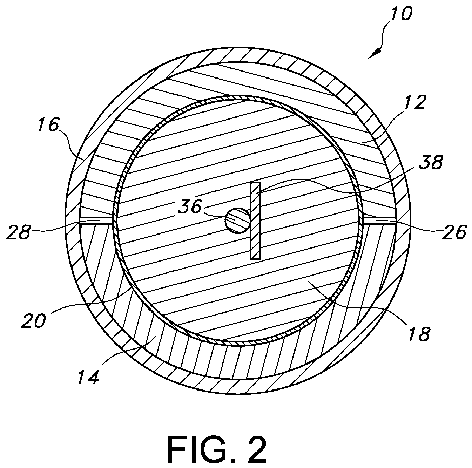

The cathode 18 is then assembled by contacting a cathode active material, for example, fluorinated carbon CFₓ, to the undulating portion 44 of the current collector 38. The cathode active material 18 as a unitary body is supported in a surrounding and contact relationship with the undulating portion 44 so that the active material fills in and around the crests and troughs 44A, 44B of the opposed undulating edges, and in the openings 46 where the active material locks to itself. The undulating edges of crests and troughs 44A, 44B, and the openings 46 serve as irregularly-shaped surfaces that prevent the cathode active material 18 from losing contact with the current collector 38. That way, the cathode active material 18 is incapable of sliding in an axial direction along the longitudinal axis B-B of the current collector 38 as well as being prevented from separating and delaminating from the front and back major sides and the opposed undulating edges of crests and troughs 44A, 44B. As shown in FIG. 2, the thusly formed cathode 18 has a substantially circular cross-section along the longitudinal axis B-B of the current collector 38.

While the cathode active material comprising the cathode 18 is preferably fluorinated carbon (CFₓ), other suitable active materials include silver vanadium oxide (SVO), copper silver vanadium oxide, copper vanadium oxide, manganese dioxide, titanium disulfide, copper oxide, copper sulfide, iron sulfide, iron disulfide, lithium cobalt oxide, and mixtures thereof.

As shown further in FIG. 1, a polymeric insulator disc 48 is supported on the terminal pin 36, seated against the ferrule 32 of the GTMS 30. In this position, the outer surrounding edge of the disc 48 meets the inner cylindrical surface 16E of the casing tube 16. The insulator disc 48 is of a fluoro-polymer, such as ethylene tetrafluoroethylene (ETFE), and helps prevent attack of the insulator glass 34 by the electrolyte. The proximal end 36A of the terminal pin 36 is then connected to the land 40 of the current collector 38 by a weld 50 (FIG. 4) to connect the GTMS 30 to the cathode 18. The connection of the terminal pin 36 to the current collector 38 at the land 40 below the insulator disc 48 remains uncontacted with cathode active material.

Next, the cathode 18 is enveloped in an ionically porous polymeric material serving as the previously described separator 20 (FIG. 1). The proximal current collector portion 38B protrudes outwardly from the separator 20 for connection to the terminal pin 36. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, a polytetrafluoroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.).

The height of the anode sheets 12, 14 along the axial length of the casing tube 16 is somewhat longer than the height of the cathode 18 along the longitudinal axis of the current collector 38. The greater height of the anode sheets 12, 14 in comparison to the cathode 18 accommodates for some misalignment between the electrodes while maintaining anode active material always being opposite the cathode active material.

As previously described, the terminal pin 36 is supported in the GTMS 30 by the insulator glass 34. The ferrule 32 of the glass-to-metal seal 30 is fit into the lid opening 24A and welded to the lid 24, for example, by laser welding. The lid 24 supporting the GTMS 30 is then welded to the proximal open end 16C of the casing tube 16 to hermetically close the casing tube at that end. The terminal pin 36 connected to the cathode current collector 38 supporting the cathode active material 18, and electrically isolated from the casing tube 16, lid 24 and ferrule 32 by the insulator glass 34 serves as the positive terminal for the electrochemical cell 10.

An electrolyte (not shown) is then filled into the casing tube 16 through the lower open end 16B thereof to activate the electrode assembly before the lower closure plate 22 is hermetically secured in the casing tube by a laser weld 52. Preferably, the bottom closure plate 22 is of the same material as the casing tube 16, and the bottom plate 20 along with the casing tube 16, lid 24 and ferrule 28 comprises part of the negative terminal for the cell 10.

By way of example, in an illustrative primary cell, the lithium sheets 12, 14 contacted to the inner surface 16E of the casing tube 16 serves as the negative terminal for the electrochemical cell 10. The preferred cathode active material is CFₓ contacted to the cathode current collector 38. This electrochemical couple is preferably activated with an exemplary electrolyte comprising a 1.0M to 1.4M solution of LiAsF₆ or LiPF₆ in γ-butyrolactone. A lithium/silver vanadium oxide (Li/SVO) couple is typically activated with an electrolyte comprising 1.0M to 1.4M of LiAsF₆ or LiPF₆ in a 50:50 mixture of, by volume, 1,2-dimethoxyethene and propylene carbonate.

Thus, a novel anode construction for an electrochemical cell is described by the present invention. The novel anode is formed of at least a first lithium sheet 12 and a second lithium sheet 14 contacted to the inner surface 16E of a cylindrically-shaped casing tube 16. Importantly, the first lithium sheet 12 has spaced apart first right and left edges 12A, 12B and the second lithium sheet 14 has spaced apart second right and left edges 14A, 14B. The first and second right edges 12A, 14A of the first and second lithium sheets 12, 14 contacted to the inner surface 16E of the cylindrically-shaped casing tube 16 are adjacent to but spaced apart from each other preferably by about 0.5° to about 1° about the inner circumference of the cylindrically-shaped casing tube, and the first and second left edges 12B, 14B of the first and second lithium sheets 12, 14 contacted to the inner surface 16E of the casing tube 16 are adjacent to but spaced apart from each other preferably by about 0.5° to about 1° about the inner circumference of the cylindrically-shaped casing tube. The first and second lithium sheets 12, 14 are press-contacted or swaged onto the inner surface 16E of the casing tube 16 under sufficient force so that the swaged lithium sheets each have a somewhat reduced thickness and a somewhat greater width and height than their original shape and thickness. That is done without the first and second lithium sheets 12, 14 ever touching each ever. Lithium is a relatively sticky material, especially to itself, so should there be contact between the first and second lithium sheets, it could lead to undesirable deformation of the lithium.

Finally, while the present process has been described for contacting two lithium sheets to the inner surface of a cylindrically-shaped casing tube, the present invention should not be so limited. Those skilled in the art will readily recognize that the novel swaging process described above can be used to swage three, four, or more lithium sheets onto the inner surface of the casing. The only requirement is that the lithium sheets do not contact each other during the swaging process and that after swaging, their adjacent edges are close to but spaced apart for each other.

It is appreciated that various modifications to the inventive concepts described herein may be apparent to those of ordinary skill in the art without departing from the scope of the present invention as defined by the appended claims.

## Claims

1. An electrochemical cell, comprising:
a) a casing comprising a cylindrically-shaped casing tube having an inner surface with an inner circumference;
b) a glass-to-metal seal (GTMS) comprising a ferrule supporting an insulator glass contacting a terminal pin residing inside the ferrule, wherein the ferrule of the GTMS is secured in an opening in the casing;
c) an electrode assembly housed inside the casing, the electrode assembly comprising:
i) an anode comprising lithium contacted to the inner surface of the casing tube;
ii) a cathode current collector;
iii) a cathode comprising a cathode active material contact to the cathode current collector, wherein the cathode resides in the casing tube, spaced from the anode; and
iv) a separator segregating the lithium from directed physical contact with the cathode; and
d) an electrolyte in the casing activating the electrode assembly,
e) wherein the casing tube contacting the lithium serves as a negative terminal, and wherein the cathode current collector contacted to the cathode active material and being connected to the terminal pin electrically isolated from the casing by the GTMS serves as a positive terminal for the cell.

2. The electrochemical cell of claim 1, wherein the anode comprises at least a first lithium sheet and a second lithium sheet contacted to the inner surface of the cylindrically-shaped casing tube.

3. The electrochemical cell of claim 2, wherein the first lithium sheet comprises spaced apart first right and left edges and the second lithium sheet comprises spaced apart second right and left edges, and wherein the first and second right edges of the first and second lithium sheets contacted to the inner surface of the cylindrically-shaped casing tube are adjacent to but spaced apart from each other, and wherein the first and second left edges of the first and second lithium sheets contacted to the inner surface of the casing tube are adjacent to but spaced apart from each other.

4. The electrochemical cell of claim 3, wherein the first and second right edges of the respective first and second lithium sheets are spaced apart from each other by about 0.5° to about 1° about the inner circumference of the cylindrically-shaped casing tube, and wherein the first and second left edges of the respective first and second lithium sheets are spaced apart from each other by about 0.5° to about 1° about the inner circumference of the casing tube.

5. The electrochemical cell of any of claims 1 to 4, wherein the cathode current collector has a thickness and at least one opening through its thickness, and wherein the cathode active material contacted to the cathode current collector is locked to itself through the at least one opening.

6. The electrochemical cell of any of claims 1 to 5, wherein the cathode current collector is selected from titanium coated with carbon, tantalum, platinum, gold, aluminum, cobalt nickel alloys, highly alloyed ferritic stainless steel containing molybdenum and chromium, and nickel-, chromium- and molybdenum-containing alloys.

7. The electrochemical cell of any of claims 1 to 6, wherein the cathode active material is selected from fluorinated carbon (CFₓ), silver vanadium oxide (SVO), copper silver vanadium oxide, copper vanadium oxide, manganese dioxide, titanium disulfide, copper oxide, copper sulfide, iron sulfide, iron disulfide, lithium cobalt oxide, and mixtures thereof.

8. An electrochemical cell, comprising:
a) a casing, comprising:
i) a cylindrically-shaped casing tube extending from a lower open end to an upper open end, the casing tube comprising an outer surface spaced from an inner surface having an inner circumference;
ii) a closure plate closing the lower open end of the casing tube;
iii) a lid secured to the casing tube at the upper open end; and
iv) a glass-to-metal seal (GTMS) comprising a ferrule supporting an insulator glass contacting a terminal pin centered inside the ferrule, wherein the GTMS resides in a lid opening where the ferrule is secured to the lid; and
b) an electrode assembly housed inside the casing, the electrode assembly comprising:
i) an anode comprising at least a first lithium sheet and a second lithium sheet contacted to the inner surface of the cylindrically-shaped casing tube;
ii) a cathode current collector;
iii) a cathode comprising fluorinated carbon (CFₓ) contacted to the cathode current collector, wherein the cathode has a cylindrical shape and resides in the casing tube, spaced from the first and second lithium sheets; and
iv) a separator segregating the first and second lithium sheets from directed physical contact with the cathode; and
c) an electrolyte in the casing activating the electrode assembly,
d) wherein the casing tube contacting the first and second lithium sheets serves as a negative terminal, and wherein the cathode current collector contacted to the cathode active material and being connected to the terminal pin electrically isolated from the casing by the GTMS serves as a positive terminal for the cell.

9. The electrochemical cell of claim 8, wherein the first lithium sheet comprises spaced apart first right and left edges and the second lithium sheet comprises spaced apart second right and left edges, and wherein the first and second right edges of the first and second lithium sheets contacted to the inner surface of the cylindrically-shaped casing tube are adjacent to but spaced apart from each other, and wherein the first and second left edges of the first and second lithium sheets contacted to the inner surface of the casing tube are adjacent to but spaced apart from each other,
and preferably wherein the first and second right edges of the respective first and second lithium sheets are spaced apart from each other by about 0.5° to about 1° about the inner circumference of the cylindrically-shaped casing tube, and wherein the first and second left edges of the respective first and second lithium sheets are spaced apart from each other by about 0.5° to about 1° about the inner circumference of the casing tube.

10. A method for providing an electrochemical cell, comprising the steps of:
a) providing a casing comprising a cylindrically-shaped casing tube having an inner surface with an inner circumference;
b) providing a glass-to-metal seal (GTMS) comprising a ferrule supporting an insulator glass contacting a terminal pin residing inside the ferrule;
c) contacting at least a first lithium sheet and a second lithium sheet to the inner surface of the casing tube;
d) providing a cathode comprising a cathode active material contacted to a cathode current collector;
e) connecting the terminal pin of the GTMS to the cathode current collector of the cathode;
f) moving the ferrule of the GTMS into an opening in the casing and securing the ferrule to the casing with the cathode facing the first and second lithium sheets, wherein an intermediate separator prevents the first and second lithium sheets from physically contacting the cathode;
g) providing an electrolyte in the casing to activate the first and second lithium sheets in electrochemical association with the cathode; and
h) closing the casing,
i) wherein the casing tube contacting the first and second lithium sheets comprises a negative terminal, and wherein the cathode current collector contacted to the cathode active material and being connected to the terminal pin electrically isolated from the casing by the GTMS serves as a positive terminal for the cell.

11. The method of claim 10, including providing the first lithium sheet comprising spaced apart first right and left edges and the second lithium sheet comprising spaced apart second right and left edges, and contacting the first and second lithium sheets to the inner surface of the cylindrically-shaped casing tube so that the first and second right edges of the first and second lithium sheets are adjacent to but spaced apart from each other, and so that the first and second left edges of the first and second lithium sheets are adjacent to but spaced apart from each other,
and preferably including providing the first and second right edges of the respective first and second lithium sheets being spaced apart from each other by about 0.5° to about 1° about the inner circumference of the cylindrically-shaped casing tube, and providing the first and second left edges of the respective first and second lithium sheets being spaced apart from each other by about 0.5° to about 1° about the inner circumference of the casing tube.

12. The method of claim 10 or claim 11, further including:
a) providing the cylindrically-shaped casing tube extending from a lower open end to an upper open end;
b) providing a lid having a lid opening;
c) securing the ferrule of the GTMS to the lid in the lid opening;
d) including providing the cathode current collector as an elongate plate-shaped current collector comprising a plurality of openings;
e) connecting the terminal pin of the GTMS to the cathode current collector of the cathode;
f) moving the ferrule of the GTMS into the lid opening and securing the ferrule to the lid;
g) securing the lid to the casing tube at the upper open end with the cathode facing the first and second lithium sheets, wherein the intermediate separator prevents the first and second lithium sheets from physically contacting the cathode; and
h) after providing the electrolyte in the casing tube to activate the first and second lithium sheets in electrochemical association with the cathode, closing the lower open end of the casing tube with a closure plate.

13. The method of any of claims 10 to 12, including selecting the cathode active material from fluorinated carbon (CFₓ), silver vanadium oxide (SVO), copper silver vanadium oxide, copper vanadium oxide, manganese dioxide, titanium disulfide, copper oxide, copper sulfide, iron sulfide, iron disulfide, lithium cobalt oxide, and mixtures thereof.

14. The method of any of claims 10 to 13, including enveloping the cathode in a separator prior to moving the ferrule of the GTMS into the opening in the casing and securing the ferrule to the casing with the cathode facing the first and second lithium sheets.

15. The method of any of claims 10 to 14, including selecting the cathode current collector from titanium coated with carbon, tantalum, platinum, gold, aluminum, cobalt nickel alloys, highly alloyed ferritic stainless steel containing molybdenum and chromium, and nickel-, chromium- and molybdenum-containing alloys.
